(19) Europäisches Patentamt
European Patent Office
Office européen des brevets

(11) **EP 2 609 980 B1**

(12) **EUROPEAN PATENT SPECIFICATION**

(45) Date of publication and mention
of the grant of the patent:
**16.02.2022 Bulletin 2022/07**

(21) Application number: **12198063.5**

(22) Date of filing: **19.12.2012**

(51) International Patent Classification (IPC):
**B01D 46/24** (2006.01)   **C04B 37/00** (2006.01)
**F01N 3/022** (2006.01)   **C04B 35/573** (2006.01)
**F01N 3/035** (2006.01)

(52) Cooperative Patent Classification (CPC):
**B01D 46/2448; B01D 46/2425; B01D 46/24491;**
**B01D 46/247; B01D 46/2498; C04B 35/573;**
**C04B 37/005;** B01D 46/249; B01D 46/2494;
C04B 2235/3418; C04B 2235/3463;
C04B 2235/3826; C04B 2235/428;
C04B 2235/5228; C04B 2237/062;         (Cont.)

(54) **HONEYCOMB FILTER**

WABENFILTER

FILTRE EN NIDS D'ABEILLES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **27.12.2011 JP 2011285991**

(43) Date of publication of application:
**03.07.2013 Bulletin 2013/27**

(73) Proprietor: **NGK Insulators, Ltd.**
**Nagoya-city, Aichi 467-8530 (JP)**

(72) Inventors:
• **MITZUTANI, Takashi**
**Nagoya city, Aichi 467-8530 (JP)**
• **IWASAKI, Shingo**
**Nagoya city, Aichi 467-8530 (JP)**

• **KODAMA, Suguru**
**Nagoya city, Aichi 467-8530 (JP)**

(74) Representative: **Mewburn Ellis LLP**
**Aurora Building**
**Counterslip**
**Bristol BS1 6BX (GB)**

(56) References cited:
**EP-A1- 1 612 197    EP-A1- 1 676 620**
**EP-A1- 1 974 813    WO-A1-2011/125771**
**FR-A1- 2 951 652    US-A1- 2008 034 744**

(52) Cooperative Patent Classification (CPC): (Cont.)
C04B 2237/064; C04B 2237/083; C04B 2237/368;
F01N 3/0222; F01N 3/035

## Description

Technical Field

The present invention relates to a honeycomb filter.

Background Art

A honeycomb filter has been proposed that is manufactured by joining honeycomb segments together to form an assembly, grinding the periphery of the assembly to form a peripherally processed assembly, forming a trapping layer for trapping solid components (PM) on the partitions of the peripherally processed assembly, drying the trapping layer to form a dried product, applying a coating on the periphery of the dried product, and heating the coating and simultaneously binding the trapping layers to the partitions (see, for example, Patent Literature 1). Simultaneous heat treatment of the peripheral coating and the PM trapping layers can reduce manufacturing costs. Furthermore, the PM trapping layers have sufficiently high strength, the initial PM trapping efficiency is high, an increasing rate of initial pressure loss is low, and PM deposition causes low pressure loss. Furthermore, the honeycomb filter exhibits small hysteresis, can be easily regenerated, and has excellent performance, low manufacturing costs, and high durability.

In another proposed honeycomb filter, the density of a bonding layer in an upstream region of the honeycomb filter is increased to optimize the bonding strength of honeycomb segments (see, for example, Non-patent Literature 1).

Citation List

Patent Literature

PTL 1: JP 2010-214335 A

Non Patent Literature

NPL 1: SAE 2003-01-0376

EP 1 974 813 describes a honeycomb structured body comprising: a plurality of pillar-shaped honeycomb fired bodies each having a large number of cells longitudinally disposed in parallel with one another with a cell wall therebetween, which are combined with one another by interposing an adhesive layer, wherein a catalyst supporting layer is included in the adhesive layer on one end face side of the honeycomb structured body and no catalyst supporting layer is included in the adhesive layer on another end face side of the honeycomb structured body.

FR 2 951 652 describes a ceramic filter body comprising a plurality of filter blocks, each filter block including adjacent channels extending between inlet and outlet faces and separated by filter walls, the aforementioned channels being sealed by stoppers upstream and downstream alternatively laid out near the inlet and outlet faces, first and second filter blocks comprising of first and second external walls, respectively, defining first and second interior faces, respectively, and first and second outsides, respectively, the aforementioned first and second outsides, called "first and second faces of joint", respectively, being stuck one to the other via a joint. The aforementioned first and second external walls and the aforementioned joint are configured so that the relative variation of thermal resistance inter-blocks between first and second points measuring compared to the known as joint and aligned according to the length direction is higher than 25%, resistance inter-blocks being the specific thermal resistance measured according to the thickness of the joint between the first and second interior faces.

WO 2011/125771 A1 describes a honeycomb filter with a plurality of porous partition wall sections that form a plurality of cells, one end of which is made open and the other end of which is sealed so as to serve as an exhaust gas flow path, and trapping layers which are formed on the partition wall sections and trap/remove a solid component that is contained in the exhaust gas. The partition wall sections each have a catalyst supported on at least a part thereof, wherein $1.05 \leq a/b \leq 3.00$ is satisfied when the amount of a catalyst in a partition wall section on the upstream side is set to a(g/L), and the amount of a catalyst in a partition wall section on the downstream side is set to b(g/L). A method for setting the a/b to a predetermined value includes a method by which the entire honeycomb structure constructed by the partition wall sections is brought into contact with a catalyst component to form a catalyst, and only the partition wall section on the upstream side is then brought into contact with the catalyst component to further form a catalyst.

EP 1 676 620 describes a honeycomb structured body which is a pillar-shaped honeycomb structured body comprising a large number of through holes that are longitudinally placed in parallel with one another with a partition wall therebetween, wherein the large number of through holes include a group of large-capacity through holes being sealed at one side of an end portion of the honeycomb structured body, so that the sum of areas on a cross section perpendicular to the longitudinal direction is made relatively larger, and a group of small-capacity through holes being sealed at the other side of the end portion of the honeycomb structured body, so that the sum of areas on the cross section is made relatively smaller, and when an aperture rate which is a ratio at which the area of the group of large-capacity through holes accounts for the total area of the end face on the inlet-side of the honeycomb structured body is represented by $\alpha$ (%), and a difference in thickness on the cross section between: the portion of the partition wall that separates adjacently located through holes forming the group of large-capacity through holes from each other; and the portion of the partition wall that separates adjacently located through holes, one of which is constituting the group of large-capacity through holes and the other of which is constituting the group of small-capacity through holes, is represented by $\beta$ (mm), relationships indicated by the following inequalities (1) and (2) are satisfied:

$$0.0022\alpha + 0.0329 \leq \beta \leq 0.0071\alpha + 0.2553 \quad (1)$$

$$36 \leq \alpha \leq 60 \quad (2).$$

EP 1 612 197 describes a honeycomb structure including honeycomb segments separated by porous partitions and having circulation holes through the honeycomb segments in an axial direction; a spacer positioned between neighboring honeycomb segments of the honeycomb segments; and a bonding layer located between honeycomb segments where the spacers are positioned and bonding the neighboring honeycomb segments. The spacer has Young's modulus in a range of 0.1 to 1.5 GPa. A ratio of area of the spacer to area of the bonding layer between the neighboring honeycomb segments is in a range of 0.2 to 30%.

US 2008/0034744 A1 describes a structure for filtering exhaust gases of an internal combustion engine. This structure comprises first and second filtering elements extending essentially parallel to a longitudinal axis of the structure between an admission region of the gases into the structure and an evacuation region of the gases from the structure, and comprises a seal for joining these elements. The seal comprises at least one downstream part which has a thermal mass per unit length greater than the thermal mass per unit length of an upstream part of the seal. For example it may have a higher density.

Disclosure of Invention

Technical Problem

Some honeycomb filters have catalysts loaded thereon for decomposing unburned components (hydrocarbons (HCs) and CO) and NOx in the exhaust gas, for example. The honeycomb filter disclosed in Patent Literature 1 has not been fully investigated for such purification performance. Thus, it is desirable to improve the removal of harmful components. Although the honeycomb filter disclosed in Non-patent Literature 1 includes a particular bonding layer to increase the bonding strength of honeycomb segments, it is desirable to improve the removal of harmful components.

In view of the situations described above, it is a principal object of the present invention to provide a honeycomb filter that can more highly purify a fluid.

Solution to Problem

A honeycomb filter according to one aspect of the present invention is set out in claim 1.

In the honeycomb filter according to the present invention, the honeycomb segments include partition portions defining inlet cells and outlet cells. Each of the inlet cells has the trapping layer. The outlet cells have no trapping layer. The bonding layer has a lower density in an upstream region of the honeycomb filter than in a midstream region and a downstream region of the honeycomb filter. The upstream region of the honeycomb filter is located on an end face side on which the inlet cells have openings. Thus, the density of the bonding layer is lower in the upstream region (on an end face side) of the inlet cells, and a fluid just entering the honeycomb filter can be rapidly heated. This can further improve the purification performance of the honeycomb filter. The density of the bonding layer may be lower in the downstream region of the honeycomb filter than in the midstream region of the honeycomb filter and lower in the upstream region of the honeycomb filter than in the downstream region. This can further improve the purification performance of the honeycomb filter.

In a honeycomb filter according to the present invention, the honeycomb segments may include partition portions defining small cells and large cells. The small cells are outlet cells of a fluid. The large cells are inlet cells of the fluid and have a larger opening area than the small cells. The bonding layer has a lower density in an upstream region of the honeycomb filter than in a midstream region and a downstream region of the honeycomb filter. The upstream region of the honeycomb filter is located on an end face side on which the inlet cells have openings. Thus, the density of the bonding layer is lower in the upstream region (on an end face side) of the inlet cells, and a fluid just entering the honeycomb filter can be rapidly heated. This can further improve the purification performance of the honeycomb filter. The density of the bonding layer may be lower in the downstream region of the honeycomb filter than in the midstream region of the honeycomb filter and lower in the upstream region of the honeycomb filter than in the downstream region. This can further improve the purification performance of the honeycomb filter.

In a honeycomb filter according to the present invention, the density ratio calculated by (B - A)/B x 100 may be 20% or more and 60% or less, wherein A denotes the X-ray density of the bonding layer in an upstream region of the honeycomb filter, and B denotes the average X-ray density of the bonding layer in a midstream region and a downstream region of the honeycomb filter. An X-ray density ratio of 20% or more can result in a decreased density of the bonding layer on an end face side and improved purification performance of the honeycomb filter. An X-ray density ratio of 60% or less can prevent a decrease in the bonding strength of the honeycomb segments.

In a honeycomb filter according to the present invention, the ratio C/D of the porosity C of the bonding layer in an upstream region of the honeycomb filter to the average porosity D of the bonding layer in a midstream region and a downstream region of the honeycomb filter may be 1.05 or more and 1.30 or less. A ratio C/D of 1.05 or more can result in a decreased density of the bonding layer on an end face side and improved purification performance of the honeycomb filter. A ratio C/D of 1.30 or less can prevent a decrease in the bonding strength of the honeycomb segments.

In a honeycomb filter according to the present invention, the bonding layer includes spacers for adjusting the distance between the honeycomb segments, and the spacers have a higher porosity in an upstream region than in a downstream region of the honeycomb filter. Thus, one end face region (for example, the upstream region) of the honeycomb filter can relatively easily have a lower density than the other end face region (for example, the downstream region) using the spacers.

A honeycomb filter according to the present invention may contain a catalyst. The catalyst can facilitate the removal of trapped solid components by combustion.

Brief Description of Drawings

Fig. 1 is a schematic explanatory view of an example of the structure of a honeycomb filter 20.
Fig. 2 is an explanatory view of a large cell 23, a small cell 25, a partition portion 22, and a trapping layer 24.
Fig. 3 is an explanatory view of a process of manufacturing a honeycomb filter 20.
Fig. 4 is an explanatory view of the temperature distribution of a honeycomb segment 21.
Fig. 5 is a schematic explanatory view of an example of the structure of a honeycomb filter 40.
Fig. 6 is the X-ray density measurements for a bonding layer, a honeycomb segment, and a honeycomb filter using X-ray CT scan in Experimental Example 3.
Fig. 7 is the measurement of HC removal efficiency (%) as a function of the ratio C/D of the porosity C of a bonding layer in an upstream region to the average porosity D of the bonding layer in midstream and downstream regions.

Detailed Description of Embodiments

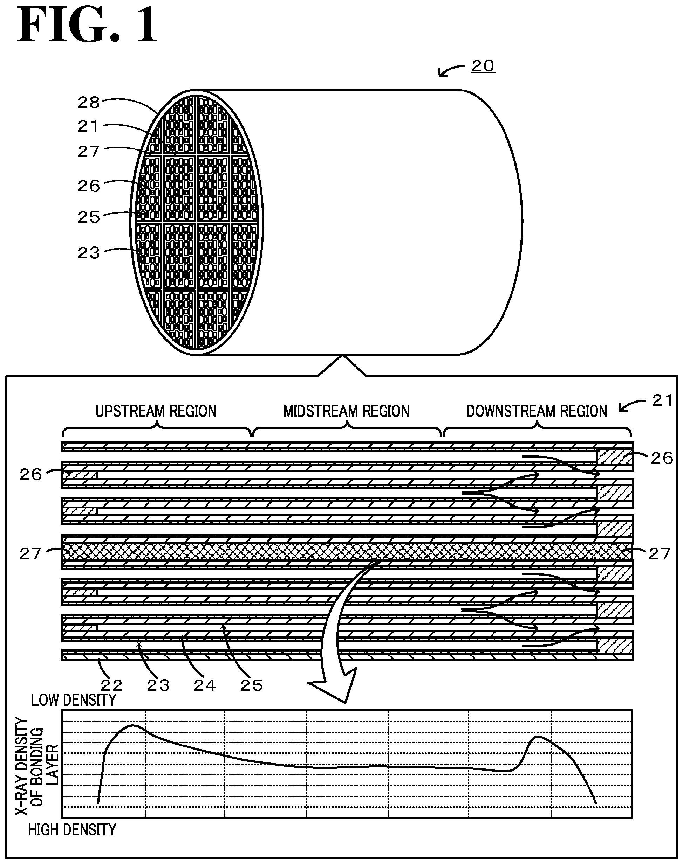

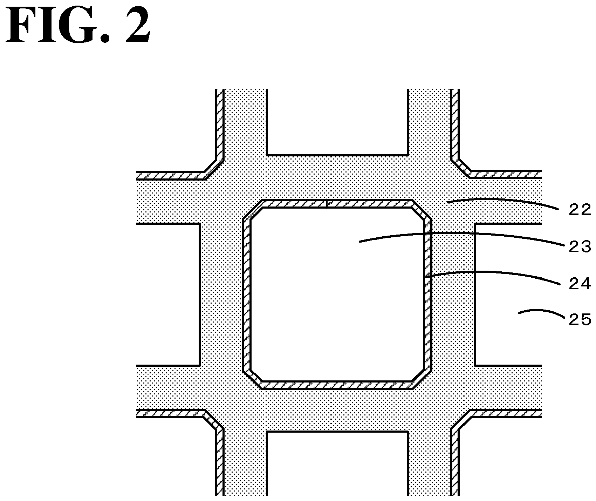

A honeycomb filter according to one embodiment of the present invention will be described below with reference to the accompanying drawings. Fig. 1 is a schematic explanatory view of the structure of a honeycomb filter 20 according to an embodiment of the present invention. Fig. 2 is an explanatory view of a large cell 23, a small cell 25, a partition portion 22, and a trapping layer 24. As illustrated in Fig. 1, the honeycomb filter 20 according to the present embodiment includes honeycomb segments 21, a bonding layer 27 for joining two or more honeycomb segments 21 together, and an outer protective portion 28 for protecting the periphery of the honeycomb filter 20. Each of the honeycomb segments 21 includes a plurality of porous partition portions 22, a trapping layer 24 disposed on each of the partition portions 22, and sealing portions 26 for sealing cell ends. The porous partition portions 22 define a plurality of cells each serving as a flow path of a fluid. The trapping layer 24 traps solid components contained in the fluid. In Fig. 1, the honeycomb filter 20 is cylindrical, each of the honeycomb segments 21 is rectangular columnar, each of large cells 23 is octagonal columnar, and each of small cells 25 is rectangular columnar (see Fig. 2).

Each of the honeycomb segments 21 includes the small cells 25 and the large cells 23 defined by the partition portions 22. The small cells 25 correspond to the outlet cells for an exhaust gas (fluid). The large cells 23 correspond to the inlet cells, which have a larger opening area than the small cells 25. Each of the honeycomb segments 21 includes the partition portions 22 such that the small cells 25 that are open at a first end and sealed at a second end and the large cells 23 that are sealed at the first end and open at the second end are alternately disposed. In the honeycomb segments 21, the partition portions 22 also define the large cells 23 serving as the inlet cells on which the trapping layer 24 is formed and the small cells 25 serving as the outlet cells on which no trapping layer. In the honeycomb filter 20, the large cells 23 are inlet cells for an exhaust gas fluid, and the small cells 25 are outlet cells for the exhaust gas. The trapping layer 24 is formed on the inner wall of each of the large cells 23. In the honeycomb filter 20, an exhaust gas enters the inlet large cells 23, passes through the trapping layers 24 and the partition portions 22, and is exhausted from the outlet small cells 25, during which PM in the exhaust gas is trapped on the trapping layers 24. Use of the large cells 23 having a large opening area as the inlet and the small cells 25 having a small opening area as the outlet can decrease the difference in flow rate between the inlet and the outlet and increase the PM trapping efficiency of the trapping layers 24.

The partition portion 22 preferably has a thickness of 0.15 mm or more and 0.46 mm or less, more preferably 0.20 mm or more and 0.40 mm or less, still more preferably 0.28 mm or more and 0.35 mm or less. The partition portion 22 is porous and may contain one or more inorganic materials selected from cordierite, Si-bonded SiC, recrystallized SiC, aluminum titanate, mullite, silicon nitride, SIALON, zirconium phosphate, zirconia, titania, alumina, and silica. Among these, cordierite, Si-bonded SiC, and recrystallized SiC are preferred. The partition portion 22 preferably has a porosity of 30% by volume or more and 85% by volume or less, more preferably 35% by volume or more and 65% by volume or less. The partition portion 22 preferably has an average pore size of 10 $\mu$m or more and 60 $\mu$m or less. The porosity and the average pore size of the partition portion 22 are measured by a mercury intrusion method. The partition portion 22 having such a porosity, an average pore size, and a thickness allows an exhaust gas to easily pass through the partition portion 22 and PM to be easily trapped and removed.

The trapping layer 24 for trapping and removing PM contained in an exhaust gas may be formed of particle groups having an average particle size smaller than the average pore size of the partition portion 22 and may be disposed on the partition portion 22. The average size of raw material particles constituting the trapping layer 24 is preferably 0.5 $\mu$m or more and 15 $\mu$m or less. When the average size of particles constituting the trapping layer is 0.5 $\mu$m or more, a space between the particles constituting the trapping layer can be sufficiently provided, thus ensuring high permeability of the trapping layer and preventing a sudden increase in pressure loss. When the average size of particles constituting the trapping layer is 15 $\mu$m or less, there are a sufficient number of points of contact between the particles, ensuring a sufficient bond strength between the particles and a high peel strength of the trapping layer. As illustrated in Fig. 1, preferably, the trapping layer 24 is formed on the partition portion 22 of each large cell 23 and is not formed on the partition portion 22 of each small cell 25. This allows PM contained in a fluid to be efficiently removed with further decreased pressure loss. Furthermore, this facilitates the manufacture of the honeycomb filter 20. The trapping layer 24 may contain one or more inorganic materials selected from cordierite, SiC, mullite, aluminum titanate, alumina, silicon nitride, SIALON, zirconium phosphate, zirconia, titania, and silica. Preferably, the trapping layer 24 is formed of the material of the partition portion 22. The trapping layer 24 may contain 70% by weight or more ceramic or metallic inorganic fiber. The fiber facilitates PM trapping. The inorganic fiber of the trapping layer 24 may contain one or more materials selected from aluminosilicate, alumina, silica, zirconia, ceria, and mullite. The average particle size of raw material particles is the median size (D50) measured with a laser diffraction/scattering particle size distribution analyzer using water as a dispersion medium. The trapping layer 24 may be formed of particle groups of inorganic materials, and may be formed as a uniform layer on the surface of the partition portion 22 or as a partial layer on the surface of the partition portion 22.

A method for forming the trapping layer 24 may involve supplying a fluid containing the raw material for the trapping layer to a cell using a fluid as a transport medium for the raw material for the trapping layer. This is preferred because the particle groups constituting the trapping layer become coarse and can form a trapping layer having a very high porosity. The fluid as a transport medium is preferably a gas such as oxygen gas and nitrogen gas. The raw material for the trapping layer may be inorganic fiber or inorganic particles. The inorganic fiber may be the inorganic fibers described above or the inorganic material made into fibrous from, and preferably has an average diameter of 0.5 $\mu$m or more and 8 $\mu$m or less and an average length of 100 $\mu$m or more and 500 $\mu$m or less. The inorganic particles may be particles made of the inorganic material described above. For example, SiC particles or cordierite particles having an average particle size of 0.5 $\mu$m or more and 15 $\mu$m or less can be used. The raw material for the trapping layer preferably has an average particle size smaller than the average pore size of the partition portion 22. In this case, the inorganic material of the partition portion 22 is preferably the same as the inorganic material of the trapping layer 24. A gas containing inorganic particles is preferably introduced by suction on the gas outlet side. In the formation of the trapping layer 24, in addition to inorganic fiber or inorganic particles, a binding material may be supplied. The binding material may be selected from sol materials and colloid materials and is preferably colloidal silica. Preferably, the inorganic particles are coated with silica, and the inorganic particles are bound to each other with silica, and the inorganic particles are bound to the material of the particles constituting the partition portion with silica. In the case of an oxide material, such as cordierite or aluminum titanate, inorganic particles and inorganic particles and material of partition portions are preferably bound by sintering. The trapping layer 24 is preferably bonded to the partition portion 22 by forming a layer of the raw material on the partition portion 22 and performing heat treatment. For example, the heat treatment temperature is preferably 650°C or more and 1350°C or less. Heat treatment at a temperature of 650°C or more can ensure a sufficient bonding strength. Heat treatment at a temperature of 1350°C or less can prevent the blockage of pores caused by excessive oxidation of the particles. The trapping layer 24 may be formed on the cell using a slurry containing inorganic particles serving as the raw material of the trapping layer 24.

The sealing portions 26 are formed of a material having little or no permeability to an exhaust gas flowing through the cells and may contain the inorganic particles, the inorganic fiber, and the binding material described above. The outer protective portion 28 is a layer for protecting the periphery of the honeycomb filter 20 and may contain the inorganic particles, the inorganic fiber, and the binding material described above.

The bonding layer 27 is a layer for joining the honeycomb segments 21 together and may contain inorganic particles, inorganic fiber, and a binding material. The inorganic particles may be particles of the inorganic material described above and preferably have an average particle size of 0.1 $\mu$m or more and 30 $\mu$m or less. The inorganic fiber may contain one or more materials selected from aluminosilicate, alumina, silica, zirconia, ceria, and mullite. The inorganic fiber preferably has an average diameter of 0.5 $\mu$m or more and 8 $\mu$m or less and an average length of 100 $\mu$m or more and 500 $\mu$m or less. The binding material may be colloidal silica or clay. The bonding layer 27 preferably has a thickness of 0.5 mm or more and 2 mm or less.

The bonding layer 27 has a lower density in an and face region than a central region of the honeycomb filter 20. When the bonding layer 27 has a lower density on an end face side, a gas just entering the honeycomb filter can be rapidly heated. For example, the inflow of a high-temperature exhaust gas can rapidly increase the temperature of the honeycomb segments 21. This can improve the purification performance of the honeycomb filter 20, for example, through the loading of a catalyst for decomposing harmful components (HCs, CO, and NOx) contained in an exhaust gas or removing trapped solid components by combustion. The open end face side of the large cells 23 corresponds to the upstream region of the honeycomb filter 20. The midsection of the honeycomb filter 20 corresponds to the midstream region. The open end face side of the small cells 25 corresponds to the downstream region of the honeycomb filter 20. The bonding layer 27 has a lower density in the upstream region of the honeycomb filter than in the midstream region and the downstream region of the honeycomb filter. The density of the bonding layer 27 in the upstream region of the honeycomb filter 20 may be lower than the average density of the bonding layer 27 in the midstream region and the downstream region of the honeycomb filter 20. The density of the bonding layer 27 may be lower in the downstream region of the honeycomb filter 20 than in the midstream region of the honeycomb filter 20 and lower in the upstream region of the honeycomb filter 20 than in the downstream region of the honeycomb filter 20. This can further improve the purification performance of the honeycomb filter 20. The term "the density of the bonding layer" may refer to the X-ray density measured by X-ray CT.

The density ratio calculated by (B - A)/B x 100 is preferably 20% or more and 60% or less, wherein A denotes the X-ray density of the bonding layer 27 in the upstream region of the honeycomb filter 20, and B denotes the average X-ray density of the bonding layer 27 in the midstream region and the downstream region of the honeycomb filter 20. An X-ray density ratio of 20% or more can result in a decreased density on the end face side and improved purification performance of the honeycomb filter. An X-ray density ratio of 60% or less can prevent a decrease in the bonding strength of the honeycomb segments 21. The X-ray density ratio is more preferably 25% or more, still more preferably 30% or more. The X-ray density ratio is more preferably 55% or less, still more preferably 50% or less.

The ratio C/D of the porosity C of the bonding layer 27 in the upstream region of the honeycomb filter 20 to the average porosity D of the bonding layer 27 in the midstream region and the downstream region of the honeycomb filter 20 is preferably 1.05 or more and 1.30 or less. A ratio C/D of 1.05 or more can result in a decreased density on the end face side and improved purification performance of the honeycomb filter 20. A ratio C/D of 1.30 or less can prevent a decrease in the bonding strength of the honeycomb segments 21. The ratio C/D is more preferably 1.10 or more, still more preferably 1.15 or more. The ratio C/D is more preferably 1.25 or less, still more preferably 1.20 or less.

The bonding layer 27 includes spacers for adjusting the distance between the honeycomb segments 21. The spacers have a higher porosity in the upstream region than in the downstream region of the honeycomb filter 20. Thus, one end face region (the upstream region) of the honeycomb filter 20 can relatively easily have a lower density than the other end face region (the downstream region) by using the spacers.

As illustrated in Fig. 1, the upstream region, the midstream region, and the downstream region of the honeycomb filter 20 refer to three equal regions of an upstream zone, a middle zone, and a downstream zone in the flow path direction of the honeycomb filter 20. The X-ray density A of the bonding layer 27 in the upstream region of the honeycomb filter 20 is the average density measured by performing X-ray CT scanning of cross-sections along one third of the total length of the honeycomb filter 20 from the inlet end face. The density is measured in the radial cross-sections of the entire bonding layer other than the honeycomb segments and the peripheral coating. The X-ray density B, which is the average density of the bonding layer 27 in the midstream and downstream regions of the honeycomb filter 20, is measured by performing X-ray CT scanning of cross-sections along two thirds of the total length of the honeycomb filter 20 from the outlet end face. The porosity C of the bonding layer 27 in the upstream region of the honeycomb filter 20 is calculated using Archimedes' principle. The average porosity D of the bonding layer 27 in the midstream and downstream regions of the honeycomb filter 20 is also calculated using Archimedes' principle. The porosity of the bonding layer 27 may also be determined by acquiring image data of a polished cross-section of a sample for use in SEM observation embedded in resin, analyzing the image data to binarize the image data using a predetermined threshold, and calculating the porosity from binarized areas of a substance region and a pore region.

In the honeycomb filter 20, the thermal expansion coefficient of the cells 23 at a temperature in the range of 40°C to 800°C in the longitudinal direction is preferably $6.0 \times 10^{-6}$/°C or less, more preferably $1.0 \times 10^{-6}$/°C or less, still more preferably $0.8 \times 10^{-6}$/°C or less. At a thermal expansion coefficient of $6.0 \times 10^{-6}$/°C or less, thermal stress generated by exposure to a high-temperature exhaust gas can be within tolerance.

The honeycomb filter 20 may have any external shape and may be cylindrical, quadrangular prismatic, cylindroid, or hexagonal columnar. The honeycomb segments 21 may have any external shape, preferably have a plane that is easy to join, and may have a square columnar (quadrangular prismatic, hexagonal columnar, or the like) with a polygonal cross section. The cross section of the large cells 23 may be polygonal, such as triangular, tetragonal, hexagonal, or octagonal, circular, or streamlined, such as elliptical, or combination thereof. For example, the large cells 23 may have an octagonal cross section perpendicular to the exhaust gas flow direction and the small cells 25 may have a tetragonal cross section perpendicular to the exhaust gas flow direction.

The honeycomb filter 20 preferably has a cell pitch of 1.0 mm or more and 2.5 mm or less. The pressure loss during PM deposition decreases with increasing filtration area. The initial pressure loss increases with decreasing cell diameter. Thus, the cell pitch, the cell density, and the thickness of the partition portions 22 may be determined in consideration of trade-offs between initial pressure loss, pressure loss during PM deposition, and PM trapping efficiency.

The honeycomb filter 20 may be loaded with a catalyst. The catalyst may be at least one of a catalyst for promoting the combustion of trapped PM, a catalyst for oxidizing unburned gases (HCs, CO, and the like) contained in an exhaust gas, and a catalyst for occluding/adsorbing/decomposing $NO_x$. The catalyst can increase the efficiency of burning PM, oxidizing unburned gases, or decomposing $NO_x$. The catalyst more preferably contains at least one of noble metal elements and transition metal elements. The honeycomb filter 20 may be loaded with another catalyst or a purification material. Among those are a $NO_x$ storage catalyst containing an alkali metal (such as Li, Na, K, or Cs) or an alkaline-earth metal (such as Ca, Ba, or Sr), at least one rare-earth metal, a transition metal, a three-way catalyst, a promoter exemplified by cerium (Ce) and/or zirconium (Zr) oxide, or a hydrocarbon (HC) adsorbent. More specifically, examples of the noble metal include platinum (Pt), palladium (Pd), rhodium (Rh), gold (Au), and silver (Ag). Examples of the transition metal contained in the catalyst include Mn, Fe, Co, Ni, Cu, Zn, Sc, Ti, V, and Cr. Examples of the rare-earth metal include Sm, Gd, Nd, Y, La, and Pr. Examples of the alkaline-earth metal include Mg, Ca, Sr, and Ba. Among these, platinum and palladium are more preferred. The noble metal, the transition metal, or the promoter may be supported by a carrier having a large specific surface area. Examples of the carrier include alumina, silica, silica alumina, and zeolite. The honeycomb filter 20 containing a catalyst for promoting PM combustion can more easily remove PM trapped on the trapping layer 24. The honeycomb filter 20 containing a catalyst for oxidizing unburned gases or a catalyst for decomposing $NO_x$ can more highly purify an exhaust gas.

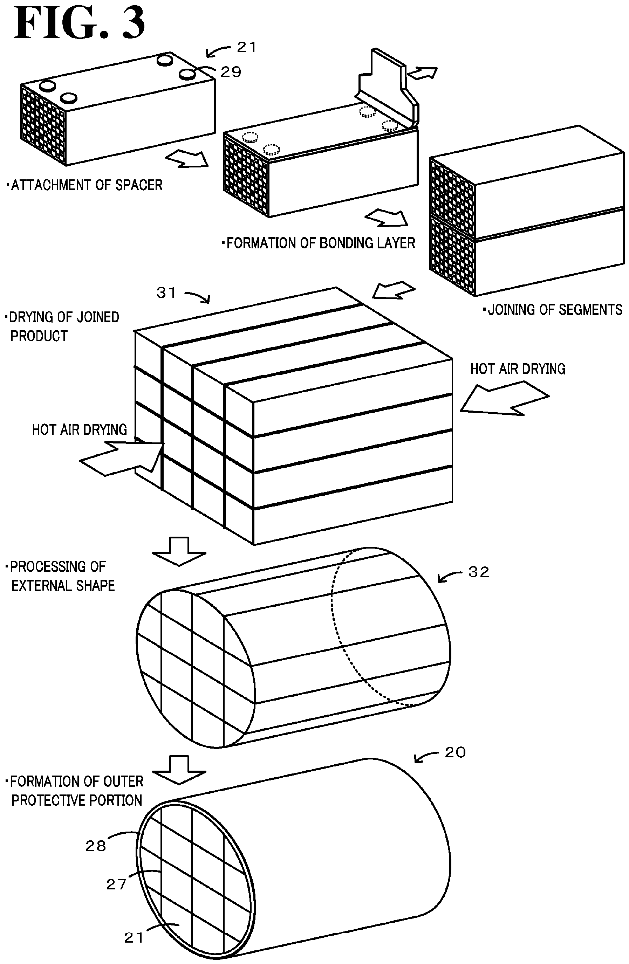

A method for manufacturing the honeycomb filter 20 will be described below. Fig. 3 is an explanatory view of a process of manufacturing the honeycomb filter 20. This process may include a process of manufacturing the honeycomb segments 21, a process of applying bonding members to surfaces of the honeycomb segments 21 and joining the honeycomb segments 21 together, a process of drying the joined product, a process of processing the external shape of the joined product, and a process of forming the outer protective portion 28. The process of manufacturing the honeycomb segments 21 may include mixing the raw material powders of the honeycomb segments 21, forming the shape of the honeycomb segments 21, forming the sealing portions 26 and the trapping layers 24, and firing the honeycomb segments 21, the sealing portions 26, and the trapping layers 24. The raw materials for the honeycomb segments 21, the trapping layers 24, and the sealing portions 26 may be the inorganic material described above.

In the subsequent joining process, as illustrated in Fig. 3, the bonding member, for example, a paste is applied to the surfaces of the honeycomb segments 21. The bonding member may be made of the inorganic material described above. A plurality of spacers 29 for adjusting the distance between the honeycomb segments 21 are attached to the surfaces of the honeycomb segments 21. The spacers 29 may be formed on the honeycomb segments 21 in the upstream region and the downstream region. This facilitates the adjustment of the distance between the honeycomb segments 21, making the thickness of the bonding layer 27 more uniform. The spacers have a higher porosity in the upstream region than in the downstream region of the honeycomb filter 20. Thus, the bonding layer 27 in one end face region (the upstream region) of the honeycomb filter 20 can relatively easily have a lower density than the other end face region (the downstream region) using the spacers. The spacers 29 may be made of the material of the bonding member. The bonding member to be applied to the honeycomb segments 21 on the upstream side to adjust the density and porosity of the bonding layer 27 may be mixed with a pore-forming material. The pore-forming material may be burned by subsequent heat treatment and thereby decrease the density of the bonding layer 27 in the end face region (the upstream region) of the honeycomb filter 20.

The amount of pore-forming material may be determined in a manner that depends on the density or porosity of the honeycomb filter 20 in the upstream region and is preferably 3% by mass or more and 30% by mass or less of the raw material of the bonding member. The pore-forming material is preferably burned by subsequent heat treatment. Examples of the pore-forming material include carbon particles, such as carbon black particles, graphite particles, and coke particles, starch particles, cellulose particles, powdered sugar, and resin particles, such as polyethylene particles, polypropylene particles, acryl particles, nylon particles, and phenol particles. Among these, materials that can be burned at lower temperature, for example, carbon black particles and starch particles are preferred. The heat treatment for burning the pore-forming material may be performed at a temperature of 400°C or more and 1000°C or less in an oxidizing atmosphere or may be actual usage conditions under which the honeycomb filter 20 is fitted to a gas exhaust pipe. In this manner, the honeycomb segments 21 are joined together using the bonding layer 27 to manufacture a joined product 31.

In the process of drying the joined product 31, hot air may be blown into the large cells 23 and the small cells 25 from the open end faces of the joined product 31. This moves water from the open end faces of the joined product 31 (the upstream region and the downstream region of the honeycomb filter 20) to the central region. This can decrease the density of the bonding layer 27 on the end face sides of the joined product 31. In the honeycomb filter 20, a larger amount of hot air tends to enter the large cells 23 than the small cells 25 because of their different opening areas. This can further decrease the density of the bonding layer 27 on the open end face side of the large cells 23. In order to further decrease the density of the bonding layer 27 on an end face side of the honeycomb filter 20, the porosity of the spacers 29 may be changed and/or the bonding member on the end face side may be mixed with the pore-forming material, and/or hot air may be blown from the end faces in the drying process. Thus, the density or porosity of the bonding layer 27 may be adjusted to a desired value by changing the porosity of the spacers 29, mixing the bonding member on an end face side with the pore-forming material, or blowing hot air from the end faces in the drying process.

In the process of processing the external shape of the joined product 31, the outer surface of the joined product 31 is processed to form a processed product 32. An outer protective portion 28 is formed on the outer surface of the processed product 32 on which no opening of the small cells 25 or the large cells 23 is formed. Thus, the honeycomb filter 20 is completed. The honeycomb filter 20 includes the bonding layer 27 having adjusted density and porosity.

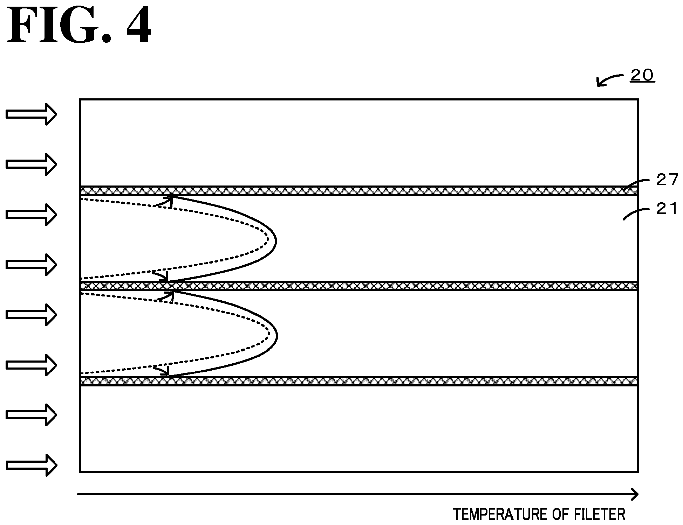

Use of the honeycomb filter 20 will be described below. Fig. 4 is an explanatory view of the temperature distribution of the honeycomb segments 21. As an example, combustion removal of HCs contained in an exhaust gas with a catalyst loaded on the honeycomb filter 20 will be described below. The catalyst loaded on the honeycomb filter 20 performs the function of removing HCs by combustion when heated to a certain temperature range. For example, a low catalyst temperature in cold start may result in poor combustion removal of HCs. In particular, when the bonding layer 27 has a high density, thermal energy of an exhaust gas is consumed to increase the temperature of the bonding layer 27. Thus, the catalyst sometimes cannot function satisfactorily. In the honeycomb filter 20, the bonding layer 27 in the upstream region of the honeycomb filter 20 has a low density. Thus, as illustrated in Fig. 4, the temperature of the honeycomb segment 21 is easy to increase on the periphery of the honeycomb segment 21, and the catalyst can function effectively on the periphery of the honeycomb segment 21. Thus, the honeycomb filter 20 can have improved purification performance.

In the honeycomb filter 20 according to the present embodiment, the bonding layer 27 has a lower density in the end face regions of the honeycomb filter 20 than in the central region of the honeycomb filter 20. When the bonding layer 27 has a low density on the end face sides, a gas just entering the honeycomb filter can be rapidly heated. This can further improve the purification performance of the honeycomb filter through combustion removal of hydrocarbon components in a fluid or combustion removal of trapped solid components.

The present invention is not limited to the embodiments described above and can be implemented in various aspects within the scope of the present claims.

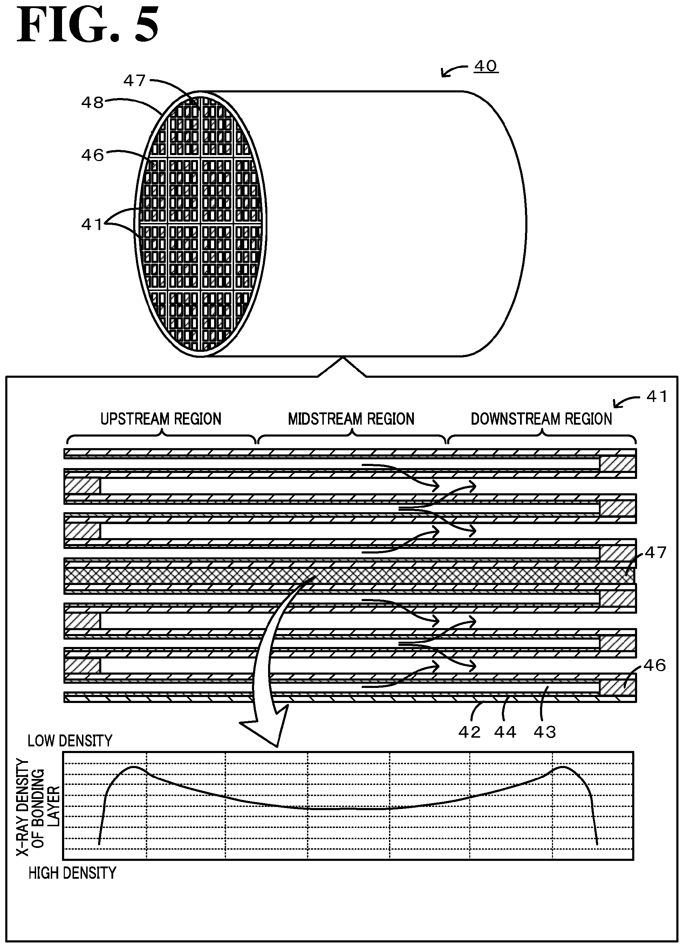

For example, although the honeycomb filter 20 includes the large cells 23 and the small cells 25, and the inlet cells and the outlet cells have different opening areas in the embodiments described above, the inlet cells and the outlet cells may have the same opening area as in the case of cells 43 of a honeycomb filter 40, as illustrated in Fig. 5. The honeycomb filter 40 includes partition portions 42, trapping layers 44, sealing portions 46, and bonding layers 47, which may be the same as the partition portions 22, the trapping layers 24, the sealing portions 26, and the bonding layers 27 of the honeycomb filter 20. This can also further improve the purification performance of the honeycomb filter.

Although the honeycomb filter 20 contains a catalyst in the embodiments described above, any honeycomb filter that can filter out substances to be removed in a fluid is suitable. The honeycomb filter 20 may contain no catalyst. For example, subsequent loading of a catalyst can further improve the purification performance of the honeycomb filter. Although the honeycomb filter 20 traps PM in an exhaust gas, any honeycomb filter for trapping and removing solid components contained in a fluid may be suitable. For example, honeycomb filters for use in engines of construction equipment and honeycomb filters for use in factories and power plants are also suitable.

Examples

Specific experimental examples of the manufacture of a honeycomb filter having a density lower in the upstream region than the average density of the midstream and downstream regions will be described below. Honeycomb filters having the shapes illustrated in Figs. 1 and 3 were mainly manufactured.

Process of Forming Honeycomb Segment

A SiC powder and a metallic Si powder were mixed at a mass ratio of 80:20. The resulting mixture was kneaded with methylcellulose, hydroxypropoxylmethylcellulose, a surfactant, and water to prepare a plastic pug. The pug was extruded through a die to form a honeycomb segment formed product having a desired shape. The honeycomb segment formed product was dried using a microwave and then with hot air, was sealed, was calcined in an oxidizing atmosphere at 550°C for three hours, and was baked in an inert atmosphere at 1400°C for two hours. The sealing portions were formed by masking alternate cell openings in one end face of the segment formed product and immersing the masked end face in a sealing slurry containing a SiC raw material, thereby alternately forming openings and sealing portions. The other end face was then masked in the same manner. The sealing portions were formed such that cells that were open at a first end and sealed at a second end and cells that were sealed at the first end and open at the second end were alternately disposed. The honeycomb filter had a cross-section diameter of 144 mm and a length of 152 mm. The cell density was 46.5 cell/cm$^2$. The partition portions had a thickness of 1.41 mm. The inlet cells had an octagonal cross-section. The outlet cells had a tetragonal cross-section. The area ratio of the inlet cells to the outlet cells was 1.7. The honeycomb segments had a porosity of 50% and an average pore size of 15 $\mu$m. The porosity and the average pore size of the partition portions were measured with a mercury porosimeter (Auto Pore III 9405 manufactured by Micromeritics).

Process of Forming Trapping Layer

Air containing SiC particles having an average particle size (8 $\mu$m) smaller than the average pore size of the partition was introduced from open ends of the honeycomb segments on the exhaust gas inlet side while drawn in by suction from the outlet side of the honeycomb segments. The SiC particles were deposited on the surface layers of the cell partition portions on the exhaust gas inlet side. Heat treatment in the atmosphere at 1300°C for two hours was performed to join the SiC particles deposited on the surface layers of the partitions together and the deposited SiC particles and SiC and Si particles constituting the partitions together. Thus, trapping layers can be formed on the partition portions. The average particle size of the raw material particles (the partition portions, the trapping layers, space-forming members, and the like) is the median size (D50) measured with a laser diffraction/scattering particle size distribution analyzer (LA-910 manufactured by Horiba, Ltd.) using water as a dispersion medium.

Joining Process

Two spacers were attached to one side surface of each of the honeycomb segments in the upstream region. Two spacers were also attached to the side surface in the downstream region. The spacers attached to the side surface on the upstream side had a porosity of 65%, and the spacers attached to the side surface on the downstream side had a porosity of 70%. The porosity of the spacers was determined by the image analysis of an SEM image after resin embedding and polishing. A binder slurry prepared by kneading alumina silicate fiber, colloidal silica, poly(vinyl alcohol), SiC, and water was applied to the side surface on which the spacers were attached. The honeycomb segments were joined together and pressed against each other and were heat-dried to form a tetragonal honeycomb segment assembly. In the drying process after joining, a high-temperature gas was flowed at a high flow rate through the upstream end face to promote the drying of the bonding layers in the upstream region. The binder slurry was mixed with a pore-forming material and was applied to the upstream region of the honeycomb filter so as to adjust the density in the upstream region. The porosity of the spacers, the amount of pore-forming material to be mixed with the binder slurry, and the method for drying the honeycomb segment assembly were changed so as to adjust the X-ray density A of the bonding layers in the upstream region, the average X-ray density B of the bonding layers in the midstream and downstream regions, the X-ray density ratio, the average porosity C of the bonding layers in the upstream region, the average porosity D of the bonding layers in the midstream and downstream regions, and the ratio C/D. The honeycomb segment assembly was cylindrically ground. A coating slurry composed of the same materials as the binder slurry was then applied to the honeycomb segment assembly and was hardened by drying to manufacture a cylindrical honeycomb filter having a desired shape, segment shape, and cell structure.

Catalyst Loading Process

Alumina, platinum, and a ceria-based material were mixed at a ratio of 7:0.5:2.5 based on the mass ratio to prepare an aqueous catalyst slurry. The ceria-based material was Ce:Zr:Pr:Y:Mn = 60:20:10:5:5 based on the mass ratio. The outlet end face (exhaust gas outlet side) of the honeycomb segment was immersed in the catalyst slurry up to a predetermined height. The catalyst slurry was drawn in by suction from the inlet end face (the exhaust gas inlet side) at a predetermined suction pressure and suction flow rate for a predetermined time to allow the catalyst to be loaded on the partition, was dried at 120°C for two hours, and was baked at 550°C for one hour. The amount of catalyst per unit volume of the honeycomb filter was 30 g/L.

Measurement of Bonding Layer Density and Bonding Layer Porosity

The densities of the bonding layer in the upstream region, the midstream region, and the downstream region of the honeycomb filter were measured by X-ray CT (Aquilion manufactured by Toshiba Corp.). The cross-sections of the bonding layer were scanned at intervals of approximately 3 mm in the axial direction of the honeycomb filter to acquire a three-dimensional X-ray image of the honeycomb filter. The average X-ray density of the cross-sections of the entire bonding layer other than the honeycomb segments and the peripheral coating was determined by image analysis. The average density of the midstream region and the downstream region was determined. The X-ray density A of the bonding layer in the upstream region of the honeycomb filter 20 was the average density measured at the cross-sections along one third of the total length of the honeycomb filter 20 from the inlet end face. The density of the bonding layer in the midstream region of the honeycomb filter 20 was measured along one third to two thirds of the total length of the honeycomb filter 20 from the inlet end face. The density of the bonding layer in the downstream region of the honeycomb filter 20 was measured along one third of the total length of the honeycomb filter 20 from the outlet end face. The porosity of the bonding layer was calculated using Archimedes' principle.

Experimental Example 1

A honeycomb filter according to Experimental Example 1 was fabricated in which the X-ray density A of the bonding layer in the upstream region was 153, the average X-ray density B of the bonding layer in the midstream and downstream regions was 180, the X-ray density ratio $(B - A)/B \times 100$ of the X-ray density B and the X-ray density A was 15%, the porosity C of the bonding layer in the upstream region was 41%, the average porosity D of the bonding layer in the midstream and downstream regions was 40%, and the ratio C/D was 1.02.

Experimental Examples 2 to 5

Honeycomb filters according to Experimental Examples 2 to 5 were fabricated in which the average X-ray density B of the bonding layer was 180, and the average porosity D was 40%. With respect to the honeycomb filter according to Experimental Example 2, the X-ray density A in the upstream region of the bonding layer was 144, the X-ray density ratio was 20%, the porosity C of the bonding layer in the upstream region was 42%, and the ratio C/D was 1.05. With respect to the honeycomb filter according to Experimental Example 3, the X-ray density A in the upstream region of the bonding layer was 108, the X-ray density ratio was 40%, the porosity C of the bonding layer in the upstream region was 47%, and the ratio C/D was 1.18. With respect to the honeycomb filter according to Experimental Example 4, the X-ray density A in the upstream region of the bonding layer was 72, the X-ray density ratio was 60%, the porosity C of the bonding layer in the upstream region was 52%, and the ratio C/D was 1.30. With respect to the honeycomb filter according to Experimental Example 5, the X-ray density A in the upstream region of the bonding layer was 63, the X-ray density ratio was 65%, the porosity C of the bonding layer in the upstream region was 53%, and the ratio C/D was 1.33.

Experimental Examples 6 to 10

Honeycomb filters according to Experimental Examples 6 to 10 were fabricated in which the average X-ray density B of the bonding layer was 180, and the average porosity D was 55%. With respect to the honeycomb filter according to Experimental Example 6, the X-ray density A in the upstream region of the bonding layer was 153, the X-ray density ratio was 15%, the porosity C of the bonding layer in the upstream region was 56%, and the ratio C/D was 1.02. With respect to the honeycomb filter according to Experimental Example 7, the X-ray density A in the upstream region of the bonding layer was 144, the X-ray density ratio was 20%, the porosity C of the bonding layer in the upstream region was 58%, and the ratio C/D was 1.05. With respect to the honeycomb filter according to Experimental Example 8, the X-ray density A in the upstream region of the bonding layer was 108, the X-ray density ratio was 40%, the porosity C of the bonding layer in the upstream region was 65%, and the ratio C/D was 1.18. With respect to the honeycomb filter according to Experimental Example 9, the X-ray density A in the upstream region of the bonding layer was 72, the X-ray density ratio was 60%, the porosity C of the bonding layer in the upstream region was 72%, and the ratio C/D was 1.30. With respect to the honeycomb filter according to Experimental Example 10, the X-ray density A in the upstream region of the bonding layer was 63, the X-ray density ratio was 65%, the porosity C of the bonding layer in the upstream region was 73%, and the ratio C/D was 1.33.

Experimental Examples 11 to 15

Honeycomb filters according to Experimental Examples 11 to 15 were fabricated in which the average X-ray density B of the bonding layer was 220, and the average porosity D was 70%. With respect to the honeycomb filter according to Experimental Example 11, the X-ray density A in the upstream region of the bonding layer was 187, the X-ray density ratio was 15%, the porosity C of the bonding layer in the upstream region was 71%, and the ratio C/D was 1.02. With respect to the honeycomb filter according to Experimental Example 12, the X-ray density A in the upstream region of the bonding layer was 176, the X-ray density ratio was 20%, the porosity C of the bonding layer in the upstream region was 74%, and the ratio C/D was 1.05. With respect to the honeycomb filter according to Experimental Example 13, the X-ray density A in the upstream region of the bonding layer was 132, the X-ray density ratio was 40%, the porosity C of the bonding layer in the upstream region was 82%, and the ratio C/D was 1.18. With respect to the honeycomb filter according to Experimental Example 14, the X-ray density A in the upstream region of the bonding layer was 88, the X-ray density ratio was 60%, the porosity C of the bonding layer in the upstream region was 91%, and the ratio C/D was 1.30. With respect to the honeycomb filter according to Experimental Example 15 the X-ray density A in the upstream region of the bonding layer was 77, the X-ray density ratio was 65%, the porosity C of the bonding layer in the upstream region was 93%, and the ratio C/D was 1.33.

Experimental Examples 16 to 18

Honeycomb filters according to Experimental Examples 16 to 18 were fabricated in which the inlet cells and the outlet cells had a tetragonal cross-section and had the same opening area, the average X-ray density B of the bonding layer was 180, and the average porosity D was 55%. The honeycomb filters had a cell density of 46.5 cell/cm2 and a partition portion thickness of 0.305 mm. With respect to the honeycomb filter according to Experimental Example 16, the X-ray density A in the upstream region of the bonding layer was 144, the X-ray density ratio was 20%, the porosity C of the bonding layer in the upstream region was 58%, and the ratio C/D was 1.05. With respect to the honeycomb filter according to Experimental Example 17, the X-ray density A in the upstream region of the bonding layer was 108, the X-ray density ratio was 40%, the porosity C of the bonding layer in the upstream region was 65%, and the ratio C/D was 1.18. With respect to the honeycomb filter according to Experimental Example 18, the X-ray density A in the upstream region of the bonding layer was 72, the X-ray density ratio was 60%, the porosity C of the bonding layer in the upstream region was 72%, and the ratio C/D was 1.30.

(1) Measurement of HC (hydrocarbon) Removal Efficiency

The honeycomb filter thus fabricated was installed in a 2.2-L diesel engine. The state of the engine was changed from idle to 2500 rpm and 70 Nm within 10 seconds. The HC concentrations at positions upstream and downstream from the honeycomb filter were measured with a measuring instrument (MEXA-1300M manufactured by Horiba, Ltd.). The HC removal efficiency of the honeycomb filter was determined from the rate of change in the HC concentrations. The HC removal efficiency determined 20 seconds after the start of the measurement was defined as the HC removal performance of the sample. This test method is known to correlate with the cold start mode in the NEDC mode, which is an emission measurement mode in Europe. The measurement after 20 seconds is shown to correlate with emission. It is difficult to comply with the regulatory mode in Europe at a HC removal efficiency of less than 75%.

(2) Regeneration Limit Test

The honeycomb filter thus fabricated was installed in a 2.2-L diesel engine in the same manner as in the measurement of the HC removal efficiency described above. And, 12 g/L of soot was deposited at 2000 rpm and 45 Nm. The inlet gas temperature of the honeycomb filter was increased to 700°C by postinjection. When the pressure loss due to the honeycomb filter decreased, the postinjection was finished, and the engine was idled. A large amount of oxygen supplied to the honeycomb filter during idling may cause abnormal combustion of residual soot and abrupt heat generation, thereby causing a crack in the honeycomb filter. After the regeneration test, joined portions were examined for cracks. No cracks was indicated by a circle, and a crack in part of the joined portions was indicated by a triangle.

Experimental Results

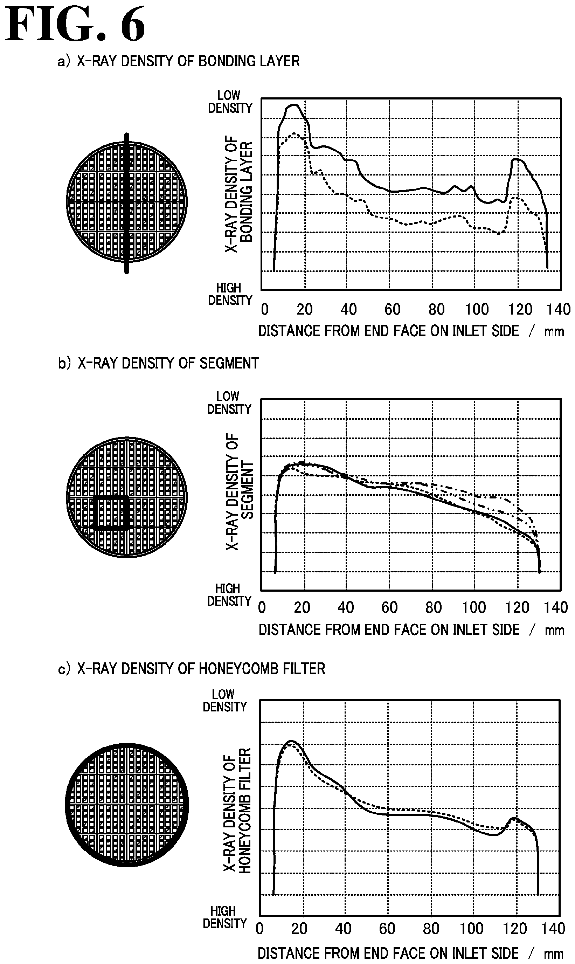

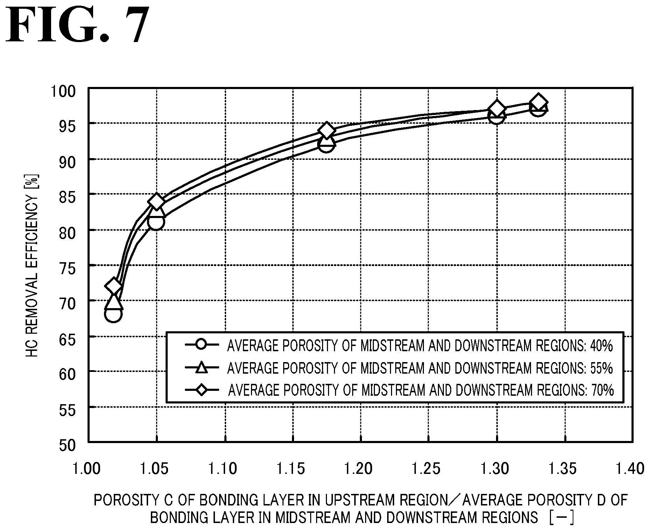

Table 1 shows the X-ray density, the porosity, and the measurements of the bonding layers in Experimental Examples 1 to 18. Fig. 6 depicts the X-ray density measurements for the bonding layer, the honeycomb segment, and the honeycomb filter using X-ray CT scan in Experimental Example 3. Fig. 7 depicts the measurement of HC removal efficiency (%) as a function of the ratio C/D of the porosity C of the bonding layer in the upstream region to the average porosity D of the bonding layer in the midstream and downstream regions. Fig. 6 shows that the X-ray density of the bonding layer was lower in the downstream region of the honeycomb filter than in the midstream region of the honeycomb filter and lower in the upstream region of the honeycomb filter than in the downstream region of the honeycomb filter in Experimental Example 3. Table 1 shows that, in Experimental Examples 1 to 18, the X-ray density A of the bonding layer in the upstream region of the honeycomb filter tended to be lower than the average X-ray density B of the bonding layer in the midstream and downstream regions of the honeycomb filter.

Table 1 and Fig. 7 also show that the HC removal efficiency was improved when the X-ray density A of the bonding layer in the upstream region of the honeycomb filter was lower than the average X-ray density B of the bonding layer in the midstream and downstream regions of the honeycomb filter. This is probably because when the density of the bonding layer in the upstream region is lower than the average density of the bonding layer in the midstream and downstream regions, a gas just entering the honeycomb filter can be rapidly heated, thereby easily increasing the temperature of a portion having high heat capacity in the vicinity of the bonding layer in the upstream region of the honeycomb filter. In particular, it was also found that the HC removal performance was improved when the X-ray density ratio of the X-ray density A and the X-ray density B of the bonding layer was 20% or more and when the ratio C/D of the porosity C of the bonding layer in the upstream region to the average porosity D of the bonding layer in the midstream and downstream regions was 1.05 or more. However, an excessively low density of the bonding layer in the upstream region resulted in a low bonding strength between the segments. A thermal stress in the regeneration limit test caused a tensile stress in the bonding member through the expansion of the segments, thereby causing a crack in the bonding layer. Thus, it was found that the X-ray density ratio was preferably 60% or less, and the ratio C/D was preferably 1.30 or less.

Table 1

| Experimental Example No. | X-ray Density | | | Porosity of Bonding Layer | | | HC Removal Efficiency | Regeneration Limit |
|---|---|---|---|---|---|---|---|---|
| | Upstream Region | Average of Midstream and Downstream Regions | Density Ratio of Upstream Region to Midstream and Downstream Regions[1) | Upstream Region | Average of Midstream and Downstream Regions | Ratio of Upstream Region to Average of Midstream and Downstream Region | | |
| | A | B | [%] | C[%] | D[%] | C/D[-] | [%] | [-] |
| Experimental Example 1 | 153 | 180 | 15 | 41 | 40 | 1.02 | 68 | ○ |
| Experimental Example 2 | 144 | 180 | 20 | 42 | 40 | 1.05 | 81 | ○ |
| Experimental Example 3 | 108 | 180 | 40 | 47 | 40 | 1.18 | 92 | ○ |
| Experimental Example 4 | 72 | 180 | 60 | 52 | 40 | 1.30 | 96 | ○ |
| Experimental Example 5 | 63 | 180 | 65 | 53 | 40 | 1.33 | 97 | △ |
| Experimental Example 6 | 153 | 180 | 15 | 56 | 55 | 1.02 | 70 | ○ |
| Experimental Example 7 | 144 | 180 | 20 | 58 | 55 | 1.05 | 83 | ○ |
| Experimental Example 8 | 108 | 180 | 40 | 65 | 55 | 1.18 | 93 | ○ |
| Experimental Example 9 | 72 | 180 | 60 | 72 | 55 | 1.30 | 97 | ○ |
| Experimental Example 10 | 63 | 180 | 65 | 73 | 55 | 1.33 | 98 | △ |
| Experimental Example 11 | 187 | 220 | 15 | 71 | 70 | 1.02 | 72 | ○ |
| Experimental Example 12 | 176 | 220 | 20 | 74 | 70 | 1.05 | 84 | ○ |

(continued)

| Experimental Example No. | X-ray Density | | | Porosity of Bonding Layer | | | HC Removal Efficiency | Regeneration Limit |
|---|---|---|---|---|---|---|---|---|
| | Upstream Region | Average of Midstream and Downstream Regions | Density Ratio of Upstream Region to Midstream and Downstream Regions[1] | Upstream Region | Average of Midstream and Downstream Regions | Ratio of Upstream Region to Average of Midstream and Downstream Region | | |
| | A | B | [%] | C[%] | D[%] | C/D[-] | [%] | [-] |
| Experimental Example 13 | 132 | 220 | 40 | 82 | 70 | 1.18 | 94 | ○ |
| Experimental Example 14 | 88 | 220 | 60 | 91 | 70 | 1.30 | 97 | ○ |
| Experimental Example 15 | 77 | 220 | 65 | 93 | 70 | 1.33 | 98 | △ |
| Experimental Example 16 | 144 | 180 | 20 | 58 | 55 | 1.05 | 83 | ○ |
| Experimental Example 17 | 108 | 180 | 40 | 65 | 55 | 1.18 | 93 | ○ |
| Experimental Example 18 | 72 | 180 | 60 | 72 | 55 | 1.30 | 97 | ○ |
| 1) Calculated by (B-A)/B×100(%) | | | | | | | | |

15

EP 2 609 980 B1

Industrial Applicability

The present invention can suitably be applied to filters for purifying exhaust gases emitted from automobile engines, stationary engines for construction equipment, industrial stationary engines, and combustion equipment.

## Claims

1. A honeycomb filter (20) for trapping solid components contained in a fluid, comprising:

   two or more honeycomb segments (21), each of the honeycomb segments (21) including a plurality of porous partition portions (22) and a trapping layer (24) disposed on each of the partition portions (22), each of the partition portions (22) forming a cell (23, 25) serving as a flow path of the fluid, the trapping layer (24) being configured to trap solid components contained in the fluid, and
   a bonding layer (27) for joining the two or more honeycomb segments (21) together,
   wherein
   the partition portions (22) define inlet cells (23) having the trapping layer (24) and outlet cells (25) having no trapping layer (24), and
   the bonding layer (27) has a lower density in an upstream region than in a midstream region and a downstream region of the honeycomb filter (20);
   the upstream region being a region one third of the total length of the honeycomb filter (20) from an inlet end face;
   the midstream region being a region extending from a position at one third of the total length of the honeycomb filter (20) to a position at two thirds of the total length of the honeycomb filter (20);
   the downstream region being a region one third of the total length of the honeycomb filter (20) from an outlet end face;
   the bonding layer (27) including spacers (29) for adjusting the distance between the honeycomb segments (21), and
   the spacers (29) having a higher porosity in the upstream region than in the downstream region of the honeycomb filter (20).

2. The honeycomb filter (20) according to Claim 1, wherein
   the honeycomb segments (21) include partition portions (22) defining small cells (25) and large cells (23), the small cells (25) being outlet cells of a fluid, the large cells (23) being inlet cells of the fluid and having a larger opening area than the small cells (25).

3. The honeycomb filter (20) according to any one of Claims 1 to 2, wherein the density ratio calculated by (B - A)/B x 100 is 20% or more and 60% or less, wherein A denotes the X-ray density of the bonding layer (27) in an upstream region of the honeycomb filter (20), and B denotes the average X-ray density of the bonding layer (27) in a midstream region and a downstream region of the honeycomb filter (20).

4. The honeycomb filter (20) according to any one of Claims 1 to 3, wherein the ratio C/D of the porosity C of the bonding layer (27) in an upstream region of the honeycomb filter (20) to the average porosity D of the bonding layer (27) in a midstream region and a downstream region of the honeycomb filter (20) is 1.05 or more and 1.30 or less.

5. The honeycomb filter (20) according to any one of Claims 1 to 4, further comprising a catalyst.

## Patentansprüche

1. Wabenfilter (20) zum Einfangen von Feststoffkomponenten, die in einem Fluid enthalten sind, Folgendes umfassend:

   zwei oder mehrere Wabensegmente (21), wobei jedes der Wabensegmente (21) eine Vielzahl von porösen Trennwandabschnitten (22) und eine Fangschicht (24), die auf jedem der Trennwandabschnitte (22) angeordnet ist, umfasst, wobei jeder der Trennwandabschnitte (22) eine Zelle (23, 25) ausbildet, die als Strömungspfad für das Fluid fungieren, wobei die Fangschicht (24) ausgelegt ist, um Feststoffkomponenten, die im Fluid enthalten sind, einzufangen, und
   eine Haftschlussverbindungsschicht (27) zum Verbinden der zwei oder mehreren Wabensegmente (21),
   wobei

die Trennwandabschnitte (22) Einlasszellen (23), die die Fangschicht (24) aufweisen, und Auslasszellen (25), die keine Fangschicht (24) aufweisen, umfassen und wobei

die Haftschlussverbindungsschicht (27) in einer Stromaufwärtsregion eine geringere Dichte als in einer Mittelstromregion und einer Stromabwärtsregion des Wabenfilters (20) aufweist; wobei

die Stromaufwärtsregion eine Region ist, die ein Drittel der Gesamtlänge des Wabenfilters (20) von einer Einlassendfläche aus ausmacht; wobei

die Mittelstromregion eine Region ist, die sich von einer Position bei einem Drittel der Gesamtlänge des Wabenfilters (20) zu einer Position bei zwei Dritteln der Gesamtlänge des Wabenfilters (20) erstreckt; wobei

die Stromabwärtsregion eine Region ist, die ein Drittel der Gesamtlänge des Wabenfilters (20) von einer Auslassendfläche aus ausmacht; wobei

die Haftschlussverbindungsschicht (27) Abstandhalter (29) zum Einstellen des Abstands zwischen den Wabensegmenten (21) umfasst und wobei

die Abstandhalter (29) in der Stromaufwärtsregion des Wabenfilters (20) eine höhere Porosität als in der Stromabwärtsregion aufweisen.

2. Wabenfilter (20) nach Anspruch 1, wobei
die Wabensegmente (21) Trennwandabschnitte (22) umfassen, die kleine Zellen (25) und große Zellen (23) definieren, wobei die kleinen Zellen (25) Auslasszellen für ein Fluid sind und die großen Zellen (23) Einlasszellen für das Fluid sind und eine größere Öffnungsfläche als die kleinen Zellen (25) aufweisen.

3. Wabenfilter (20) nach einem der Ansprüche 1 bis 2, wobei das Dichteverhältnis, das durch (B-A)/B x 100 berechnet wird, 20 % oder mehr und 60 % oder weniger beträgt, wobei A für die Röntgendichte der Haftschlussverbindungsschicht (27) in einer Stromaufwärtsregion des Wabenfilters (20) steht und B für die durchschnittliche Röntgendichte der Haftschlussverbindungsschicht (27) in einer Mittelstromregion und einer Stromabwärtsregion des Wabenfilters (20) steht.

4. Wabenfilter (20) nach einem der Ansprüche 1 bis 3, wobei das Verhältnis C/D der Porosität C der Haftschlussverbindungsschicht (27) in einer Stromaufwärtsregion des Wabenfilters (20) zur durchschnittlichen Porosität D der Haftschlussverbindungsschicht (27) in einer Mittelstromregion und einer Stromabwärtsregion des Wabenfilters (20) 1,05 oder mehr und 1,30 oder weniger beträgt.

5. Wabenfilter (20) nach einem der Ansprüche 1 bis 4, der ferner einen Katalysator umfasst.

**Revendications**

1. Filtre en nids d'abeilles (20) destiné à piéger des composants solides contenus dans un fluide, comprenant :

deux segments de nids d'abeilles ou plus (21), chacun des segments de nids d'abeilles (21) comprenant une pluralité de parties de séparation poreuses (22) et une couche de piégeage (24) disposée sur chacune des parties de séparation (22), chacune des parties de séparation (22) formant une cellule (23, 25) qui sert de trajet d'écoulement du fluide, la couche de piégeage (24) étant configurée pour piéger des composants solides contenus dans le fluide, et

une couche de liaison (27) destinée à joindre les deux segments de nids d'abeilles ou plus (21) ensemble, dans lequel

les parties de séparation (22) définissent des cellules d'entrée (23) ayant la couche de piégeage (24) et des cellules de sortie (25) n'ayant aucune couche de piégeage (24), et

la couche de liaison (27) possède une densité inférieure dans une zone amont que dans une zone intermédiaire et une zone aval du filtre en nids d'abeilles (20) ;

la zone amont étant une zone égale à un tiers de la longueur totale du filtre en nids d'abeilles (20) depuis une face d'extrémité d'entrée ;

la zone intermédiaire étant une zone qui s'étend d'un emplacement à un tiers de la longueur totale du filtre en nids d'abeilles (20) à un emplacement aux deux tiers de la longueur totale du filtre en nids d'abeilles (20) ;

la zone aval étant une zone à un tiers de la longueur totale du filtre en nids d'abeilles (20) depuis une face d'extrémité de sortie ;

la couche de liaison (27) comprenant des espaceurs (29) destinés à ajuster la distance entre les segments en nids d'abeilles (21), et

les espaceurs (29) présentant une porosité plus élevée dans la zone amont que dans la zone aval du filtre en nids d'abeilles (20).

2. Filtre en nids d'abeilles (20) selon la revendication 1, dans lequel
les segments en nids d'abeilles (21) comprennent des parties de séparation (22) qui définissent de petites cellules (25) et de grandes cellules (23), les petites cellules (25) étant des cellules de sortie d'un fluide, les grandes cellules (23) étant des cellules d'entrée du fluide et ayant une surface d'ouverture supérieure à celle des petites cellules (25).

3. Filtre en nids d'abeilles (20) selon l'une quelconque des revendications 1 à 2, dans lequel le rapport de densité calculé par (B - A)/B x 100 est de 20% ou plus et de 60% ou moins, où A correspond à la densité de rayons X de la couche de liaison (27) dans une zone amont du filtre en nids d'abeilles (20), et B correspond à la densité de rayons X moyenne de la couche de liaison (27) dans une zone intermédiaire et une zone aval du filtre en nids d'abeilles (20).

4. Filtre en nids d'abeilles (20) selon l'une quelconque des revendications 1 à 3, dans lequel le rapport C/D entre la porosité C de la couche de liaison (27) dans une zone amont du filtre en nids d'abeilles (20) et la porosité moyenne D de la couche de liaison (27) dans une zone intermédiaire et une zone aval du filtre en nids d'abeilles (20) est de 1,05 ou plus et 1,30 ou moins.

5. Filtre en nids d'abeilles (20) selon l'une quelconque des revendications 1 à 4, comprenant en outre un catalyseur.

# FIG. 1

# FIG. 2

# FIG. 3

·ATTACHMENT OF SPACER

·FORMATION OF BONDING LAYER

·JOINING OF SEGMENTS

·DRYING OF JOINED PRODUCT

HOT AIR DRYING

HOT AIR DRYING

·PROCESSING OF EXTERNAL SHAPE

·FORMATION OF OUTER PROTECTIVE PORTION

# FIG. 4

TEMPERATURE OF FILETER

# FIG. 5

# FIG. 6

a) X-RAY DENSITY OF BONDING LAYER

b) X-RAY DENSITY OF SEGMENT

c) X-RAY DENSITY OF HONEYCOMB FILTER

# FIG. 7

POROSITY C OF BONDING LAYER IN UPSTREAM REGION／AVERAGE POROSITY D OF BONDING LAYER IN MIDSTREAM AND DOWNSTREAM REGIONS ［－］

**EP 2 609 980 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010214335 A
- EP 1974813 A
- FR 2951652
- WO 2011125771 A1
- EP 1676620 A
- EP 1612197 A
- US 20080034744 A1